# EUROPÄISCHE PATENTANMELDUNG

(11) **EP 1 238 840 A1**
(43) Veröffentlichungstag der Anmeldung: **11.09.2002**
(21) Anmeldenummer: 02003697.6
(22) Anmeldetag: 19.02.2002
(51) Int. Cl.: B60J 7/00, B60J 1/20, B60J 7/043, B60R 21/16

(54) **Sonnenrollo für ein Fahrzeugdach und Fahrzeugdach mit einem bewegbaren Deckel**

(30) Priorität: 02.03.2001 DE 20103710 U
(71) Anmelder: Webasto Vehicle Systems International GmbH, 82131 Stockdorf (DE)
(72) Erfinder: Pfalzgraf, Manfred, 82211 Herrsching (DE)
(74) Vertreter: Konnerth, Dieter Hans

(57) **Zusammenfassung**

Die Erfindung betrifft ein Sonnenrollo, das unter einem Fahrzeugdach auf einer Wickelwelle aufgewickelt angeordnet und mittels eines an Führungen geführten Zugspriegels ausziehbar und in unterschiedlichen Auszugstellungen positionierbar ist, wobei für den Zugspriegel (26) eine Schutzeinrichtung vorgesehen ist, die im Crashfall einen Aufprall eines Insassen auf den Zugspriegel (26) mildert sowie eine Airbageinrichtung in einem Fahrzeug, an der ein Airbag (41) an einem Hinterrand (30) eines bewegbaren Deckels (10) vorgesehen ist, der in einer Dachöffnung des Fahrzeugdachs angeordnet ist und zum Freilegen der Dachöffnung unter einen hinteren Dachabschnitt absenkbar und dabei im Fahrzeuginnenraum nach hinten verschiebbar ist, so daß im Crashfall ein Aufprall eines Insassen auf den Hinterrand (30) des Deckels (10) gemildert ist.

## Beschreibung

Die Erfindung betrifft ein Sonnenrollo, das unter einem Fahrzeugdach auf einer Wickelwelle aufgewickelt angeordnet und mittels eines an Führungen geführten Zugspriegels ausziehbar und in unterschiedlichen Auszugstellungen positionierbar ist.

Die Erfindung betrifft des weiteren ein Fahrzeugdach mit einer Dachöffnung, in der ein bewegbarer Deckel angeordnet ist und zum Freilegen der Dachöffnung unter einen hinteren Dachabschnitt absenkbar und dabei im Fahrzeuginnenraum nach hinten verschiebbar ist.

Aus der DE 197 50 715 C1 ist eine Rollovorrichtung mit zwei von einer Antriebseinrichtung ausziehbaren Rollos für ein transparentes Fahrzeugdach bekannt geworden. Das hintere Rollo ist unter einem Mittelquerholm des Fahrzeugdaches angeordnet und mittels eines Auszugspriegels nach hinten ausziehbar. Im Falle eines Crashs ist nicht ausgeschlossen, daß ein im Fahrzeug hinten sitzender Fahrzeuginsasse mit seinem Kopf auf den in einer Auszugstellung festgelegten Auszugspriegel aufprallt und sich dabei verletzen kann.

Aus der DE 198 48 794 A1 ist ein Airbagvorrichtung bekannt geworden, bei der ein Airbag an einem fahrzeugfesten Rahmenteil eines Schiebedachs angeordnet ist. Bei einer Anordnung an einem Querträger des Schiebedachs verschließt der Airbag im Crashfall die Schiebedachöffnung.

Aus der EP 0 734 894 B1 ist eine Dachkonstruktion für ein Kraftfahrzeug bekannt geworden, die einen beweglichen transparenten Dachabschnitt aufweist, der absenkbar und unter einen dahinter liegenden starren transparenten Dachabschnitt verschiebbar ist. Da der bewegliche Dachabschnitt unterhalb des starren Dachabschnitts ohne Abdeckung zum Fahrzeuginnenraum hin verschiebbar ist, kann jedoch die Hinterkante des beweglichen Dachabschnitts eine Gefahrenquelle darstellen, wenn im Falle eines Crashs ein hinten sitzender Fahrzeuginsasse mit seinem Kopf gegen die Hinterkante prallt.

In der DE 44 40 730 C1 ist zur Verbesserung der in der voranstehend genannten Druckschrift beschriebenen Dachkonstruktion vorgeschlagen worden, eine Schutz- und Abdeckleiste an der Hinterkante des beweglichen Dachabschnitts anzubringen, die einen gelenkigen Leistenbereich aufweist, der federnd vorgespannt ist und sich bei abgesenktem Dachabschnitt selbsttätig aufstellt und den sich zwischen dem beweglichen und dem starren Dachabschnitt gebildeten Spalt abdeckt.

Aufgabe der Erfindung ist es, ein eingangs genanntes Sonnenrollo sowie ein eingangs genanntes Fahrzeugdach derart weiterzubilden, so daß im Falle eines Crashs die Verletzungsgefahr für Fahrzeuginsassen an dem Sonnenrollo bzw. an dem bewegbaren Deckel reduziert ist.

Diese Aufgabe wird bei dem oben genannten Sonnenrollo erfindungsgemäß dadurch gelöst, daß für den Zugspriegel eine Schutzeinrichtung vorgesehen ist, die im Crashfall einen Aufprall eines Insassen auf den Zugspriegel mildert. Durch die Schutzeinrichtung wird erreicht, daß der Zugspriegel, der ein vergleichsweise hartes Kunststoff- oder Metallteil ist, ein verringertes Verletzungsrisiko darstellt.

Vorteilhafte Ausgestaltungen der Erfindung sind in den Unteransprüchen angegeben.

Vorzugsweise enthält die Schutzeinrichtung eine Überlastsicherung, die beim Aufprall ein Ausweichen oder Nachgeben des Zugspriegels ermöglicht. Somit wird in einfacher Weise eine Schutzfunktion erzielt. Die Überlastsicherung enthält beispielsweise zumindest eine Sollbruchstelle, die vorzugsweise an dem Zugspriegel, an der Führung des Zugspriegels oder an einer Antriebseinrichtung für den Zugspriegel gebildet ist, oder eine lösbare Clipsverbindung z. B. zwischen dem Zugspriegel und der Antriebseinrichtung.

Gemäß einer Variante kann vorgesehen sein, daß als Überlastsicherung der Zugspriegel beim Aufprall verformbar und insbesondere biegsam gebildet ist.

Zweckmäßigerweise kann die Schutzeinrichtung eine Aufpralldämpfeinrichtung für den Zugspriegel sein. Dabei kann der Zugspriegel mit einem vergleichsweise weichen, nachgiebigen Material verkleidet sein. Die Aufpralldämpfeinrichtung kann auch ein Luftpolster oder anderes Polstermaterial wie Gummi oder Hartschaumstoff und insbesondere eine Airbageinrichtung enthalten, die sich bei einem Unfall bedarfsweise aufbläst und schützend vor den Zugspriegel legt.

Eine alternative Gestaltung sieht vor, daß die Rollobahn des Sonnenrollos die Airbageinrichtung enthält oder zumindest im Bereich des Zugspriegels oder über ihre gesamte Länge als Airbageinrichtung gebildet ist. Dazu kann die Rollobahn doppelwandig als zusammengelegte schlauchförmige Bahn gebildet sein, die bedarfsweise aufgeblasen wird.

Die genannten Schutzeinrichtungen sind besonders vorteilhaft einsetzbar bei einem Sonnenrollo, das im Mittelbereich des Fahrzeugdaches angeordnet ist und nach hinten ausziehbar ist, so daß ein auf einer Rücksitzbank sitzender Fahrzeuginsasse bei einem Unfall gegen den Zugspriegel prallen könnte. Jedoch eignet sie sich auch für nach vorne ausziehbare Sonnenrollos.

Das Sonnenrollo kann sowohl manuell ausziehbar sein wie auch mittels einer Antriebseinrichtung zum Ausziehen und Aufwickeln der Rollobahn bedienbar sein.

Diese Aufgabe wird des weiteren bei dem oben genannten Fahrzeugdach erfindungsgemäß dadurch gelöst, daß am Hinterrand des Deckels eine Schutzeinrichtung vorgesehen ist, die im Crashfall einen Aufprall eines Insassen auf den Hinterrand des Deckels mildert.

Vorteilhafte Ausgestaltungen der Erfindung sind in den Unteransprüchen angegeben.

Vorzugsweise ist der hintere Dachabschnitt ein festes, insbesondere transparentes Dachteil oder ein in der Dachöffnung angeordneter bewegbarer und insbesondere transparenter Deckel, unter den der insbesondere transparente vordere Deckel verschiebbar ist.

Bevorzugt enthält die Schutzeinrichtung eine Airbageinrichtung, die im Crashfall den Hinterrand des Deckels abdeckt. Der aufblasbare Airbag ist zweckmäßigerweise in einem Deckelrahmen am Hinterrand des Deckels oder in einem am Dekkelhinterrandbereich angebrachten Profil enthalten. Das Profil kann sich beim Aufblasen des Airbag definiert öffnen, so daß der Airbag eine vorbestimmte Schutzstellung am Hinterrand einnimmt.

Die Aufgabe wird auch gelöst durch eine Airbageinrichtung in einem Fahrzeug, bei der ein Airbag an einem Hinterrand eines bewegbaren Deckels vorgesehen ist, der in einer Dachöffnung des Fahrzeugdachs angeordnet ist und zum Freilegen der Dachöffnung unter einen hinteren Dachabschnitt absenkbar und dabei im Fahrzeuginnenraum nach hinten verschiebbar ist, so daß im Crashfall ein Aufprall eines Insassen auf den Hinterrand des Deckels gemildert ist.

Des weiteren wird die Aufgabe gelöst eine Airbageinrichtung in einem Fahrzeug, bei der ein Airbag an einem Zugspriegel eines Sonnenrollos vorgesehen ist, das unter einem Fahrzeugdach auf einer Wickelwelle aufgewickelt angeordnet und mittels des an Führungen geführten Zugspriegels ausziehbar und in unterschiedlichen Auszugstellungen positionierbar ist, so daß im Crashfall ein Aufprall eines Insassen auf den Zugspriegel gemildert ist.

Nachfolgend werden ein Ausführungsbeispiel des Sonnenrollos und des Fahrzeugdachs unter Bezugnahme auf die Zeichnungen näher erläutert. Es zeigt:
- Fig. 1: in einer Längsschnittansicht in schematischer Darstellung ein Fahrzeugdach mit einem absenkbaren und nach hinten verschiebbaren vorderen Deckel und einer Sonnenrolloeinrichtung in einer Schließstellung;
- Fig. 2 bis 6: in Längsschnittansichten gemäß Fig. 1 das Fahrzeugdach in unterschiedlichen Stellungen des Deckels und der Sonnenrolloeinrichtung;
- Fig. 7: in einer perspektivischen Draufsicht in schematischer Darstellung das Sonnenrollo mit einem Zugspriegel;
- Fig. 8: in einer Längsschnittansicht in vergrößerter Darstellung ein Hinterende des vorderen Deckels mit einer Airbageinrichtung;
- Fig. 9: in einer Ansicht gemäß Fig. 8 das Hinterende des vorderen Deckels mit ausgelöstem Airbag;
- Fig. 10: in einer Längsschnittansicht in vergrößerter Darstellung einen Zugspriegel mit einer Aufpralldämpfeinrichtung;
- Fig. 11: in einer Längsschnittansicht in vergrößerter Darstellung den Zugspriegel mit einer Airbageinrichtung;
- Fig. 12: in einer Längsschnittansicht in schematischer Darstellung ein Fahrzeugdach mit zwei als Airbageinrichtungen gebildeten Sonnenrolloeinrichtungen in aufgeblasener Schutzstellung;
- Fig. 13: in einer Längsschnittansicht in vergrößerter Darstellung das Hinterende der hinteren Sonnenrolloeinrichtung; und
- Fig. 14: in einer Längsschnittansicht in vergrößerter Darstellung das Hinterende der hinteren Sonnenrolloeinrichtung bei ausgelöstem Airbag.

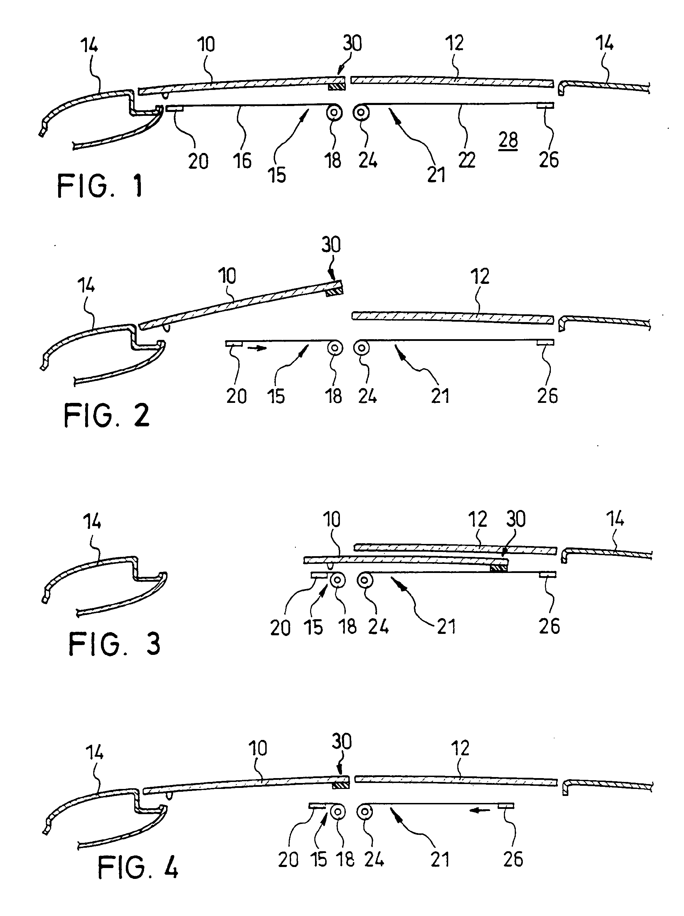

Gemäß den Fig. 1 bis 6 umfaßt ein Fahrzeugdach zwei in Schließstellung (Fig. 1) hintereinander angeordnete Deckel 10 und 12, welche in Schließstellung eine gemeinsame Dachöffnung oder zwei durch einen Mittelsteg (nicht dargestellt) getrennte Dachöffnungen in einer festen Dachhaut 14 des Fahrzeugdachs verschließen. Unterhalb des vorderen Deckels 10 ist ein vorderes Rollo 15 angeordnet, welches eine Rollobahn 16 umfaßt, die auf eine im Bereich des hinteren Endes des vorderen Deckels 10 angeordnete und in Dachquerrichtung verlaufende Wickelwelle 18 aufwickelbar ist. Am freien Ende der Rollobahn 16 ist ein Zugspriegel 20 angebracht. In ähnlicher Weise ist unterhalb des hinteren Deckels 12 ein hinteres Rollo 21 mit einer Rollobahn 22 vorgesehen, wobei die Wickelwelle 24 benachbart und parallel zu der Wickelwelle 18 des vorderen Rollos 15 angeordnet ist. Das freie, hintere Ende der Rollobahn 22 ist mit einem Zugspriegel 26 versehen. Die beiden Deckel 10 und 12 sind als transparente Deckel, vorzugsweise als Glas- oder Kunststoffdeckel, ausgebildet. Das vordere Rollo 15 und das hintere Rollo 21 sind vorgesehen, um bei Bedarf die Deckel 10 und 12 bzw. die Dachöffnung oder Dachöffnungen zumindest teilweise abzudecken und somit eine übermäßige Sonneneinstrahlung in den Fahrzeuginnenraum 28 zu verhindern.

Das vordere Rollo 15 und das hintere Rollo 21 sind vorzugsweise wie in der DE 199 10 830 C1 als Rollo mit Umlenkrollen ausgebildet, wobei an dem z. B. an seitlichen Führungen geführten Zugspriegel an beiden Seiten ein Seil angreift, welches über die entsprechenden Umlenkrollen zum seitlichen Randbereich der Wickelwelle läuft, wo es auf- bzw. abgewickelt wird. Diese Ausbildung des Rollos hat den Vorteil, daß sich der Verbund aus Rollobahn und Seilen im Kräftegleichgewicht befindet und somit einer Verschiebung eine konstante Gegenkraft entgegensetzt.

In der in Fig. 1 gezeigten Schließstellung läßt sich das vordere Rollo 15 beispielsweise manuell verschieben, um die gewünschte Regulierung der Sonneneinstrahlung durch den vorderen Deckel 10 vorzunehmen.

Der vordere Deckel 10 ist mittels eines ihm zugeordneten Antriebs einerseits mittels einer entsprechenden Ausstellmechanik mit seiner Hinterkante 30 ausstellbar und andererseits nach hinten unter den hinteren Deckel 12 verschiebbar (Fig. 3), wobei diese Bewegung ebenfalls mittels des zugeordneten Antriebs erfolgt. Der Antrieb für den vorderen Deckel 10 umfaßt üblicherweise mindestens ein und vorzugsweise zwei drucksteife Antriebskabel, welche über ein Ritzel von einem Elektromotor angetrieben werden und jeweils an einem Gleiter einer Dekkelverstellmechanik angreifen.

In Fig. 2 ist eine Stellung gezeigt, in welcher der vordere Deckel 10 mittels des zugeordneten Antriebs in die ausgestellte Stellung mit angehobener Deckelhinterkante 30 verschwenkt ist. Der Antrieb kann bei dieser Ausstellbewegung das vordere Rollo 15 mindestens ein Stück weit selbsttätig öffnen, wie dies in Fig. 2 dargestellt ist, um eine an den verschwenkten Deckel 10 angepaßte Luftströmung durch die zum Teil freigelegte Dachöffnung zu ermöglichen. Die Antriebsmechanik kann dabei beispielsweise wie in der EP 0150 470 B1 ausgebildet sein, bei der das freie Ende jedes Antriebskabels mittels einer Mitnehmereinrichtung beim Ausstellen des vorderen Deckels 10 den Zugspriegel 20 des vorderen Rollos 15 nach hinten bewegt.

Alternativ kann die Antriebsmechanik wie in der EP 0 185 993 B1 ausgebildet sein, bei der der Gleiter der Ausstellmechanik, an welcher das jeweilige Antriebskabel angreift, seitlich mit einer Zahnstange versehen ist, welche beim Ausstellvorgang mit einer dachfest angebrachten Zahnradanordnung in Eingriff kommt und diese zu einer Drehbewegung antreibt, wobei die Zahnradanordnung wiederum mit einer im Bereich des Zugspriegels 20 seitlich angeordneten Zahnstange in Eingriff steht und auf diese Weise den Zugspriegel 20 des vorderen Rollos 16 eine begrenzte Strecke nach hinten in die in Fig. 2 dargestellte Teilöffnungsstellung bewegt.

In beiden Fällen ist das vordere Rollo 15 bzw. der Zugspriegel 20 gegen eine Schließbewegung blockiert, solange der vordere Deckel 10 ausgestellt ist.

Aus der in Fig. 2 dargestellten Stellung kann der vordere Deckel 10 durch Absenken der Hinterkante 30 wieder in die in Fig. 1 dargestellte Schließstellung gebracht werden, wobei je nach Ausbildung der Antriebsmechanik der Zugspriegel 20 selbsttätig nach vorne mitgenommen werden kann, um das Rollo 15 wieder zu schließen. Aus der Schließstellung von Fig. 1 kann der Deckel 10 durch Absenken seiner Hinterkante 30 mittels des Antriebs nach hinten unter den hinteren Deckel 12 geschoben werden, bis die in Fig. 3 dargestellte Stellung erreicht ist. Bei dieser Öffnungsverschiebebewegung des Deckels 10 nimmt der Deckel 10 über eine entsprechend ausgebildete Mitnehmereinrichtung, wie sie beispielsweise aus der EP 0 185 993 B1 bekannt ist, den Zugspriegel 20 und damit die Rollobahn 16 des vorderen Rollos 15 nach hinten mit, bis das Rollo 15 ebenfalls vollständig geöffnet ist.

Beim Schließen des vorderen Deckels 10 läuft der beschriebene Vorgang in umgekehrtem Bewegungsablauf ab, so daß der vordere Deckel 10 über die Mitnehmereinrichtung den Zugspriegel 20 nach vorne in die Schließstellung mitnimmt.

Durch die beschriebene Ausgestaltung des dem vorderen Deckel 10 zugeordneten Antriebs kann das vordere Rollo 15 mindestens zum Teil selbsttätig entsprechend der Deckelstellung in zweckmäßiger Weise verstellt werden, wobei insbesondere bei einer bestimmten Deckelöffnung eine entsprechende Rolloöffnung erfolgt. Dies erhöht gegenüber einem rein manuell betätigten Rollo den Bedienkomfort, ohne daß ein zusätzlicher Antrieb für das Rollo 15 erforderlich wäre.

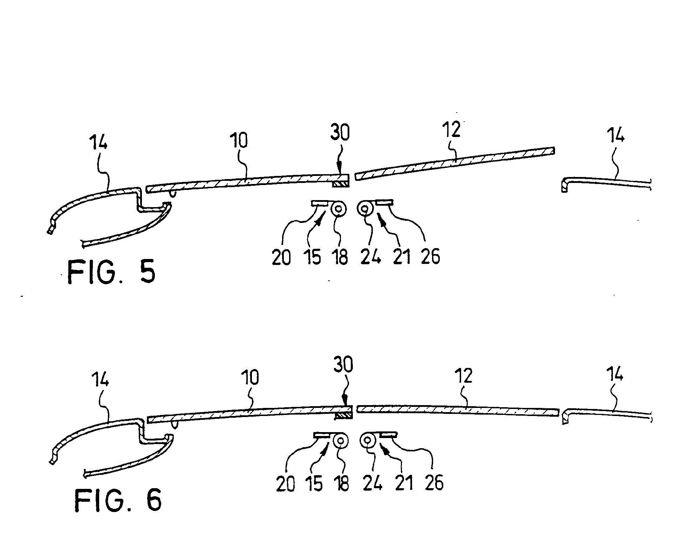

Der hintere Deckel 12 ist nur mit einer Ausstellfunktion, jedoch nicht mit einer Schiebefunktion versehen und wird von einem zweiten Antrieb angetrieben, der ebenfalls vorzugsweise einen ein Ritzel antreibenden Elektromotor und zwei von dem Ritzel angetriebene drucksteife Antriebskabel umfasst, welche an einem Gleiter der Deckelmechanik angreifen. In Fig. 4 ist eine Stellung dargestellt, in welcher der vordere Deckel 10 und der hintere Deckel 12 geschlossen sind, während das vordere Rollo 15 geöffnet ist und das hintere Rollo 21 mittels des dem hinteren Deckel 12 zugeordneten Antriebs durch Aufwickeln nach vorne geöffnet wird. Dabei ist ein Mitnehmer an dem angetriebenen Gleiter vorgesehen, welcher den Zugspriegel 26 des hinteren Rollos 21 mitnimmt. Bevor das hintere Rollo 21 vollständig geöffnet ist, bewirkt die Antriebsbewegung des Gleiters noch keine Betätigung des Ausstellmechanismus des hinteren Deckels 12. Wenn die vollständige Öffnung des hinteren Rollos 21 erreicht ist, klinkt sich der Gleiter selbsttätig bezüglich des Zugspriegels 26 aus, wobei dieser mittels eines Riegelsteins in der Öffnungsstellung verriegelt wird. Die Funktion eines solchen Riegelsteins ist beispielsweise aus der DE 39 30 756 A1 oder der DE 40 01 759 C1 prinzipiell bekannt. Anschließend klinkt sich der Gleiter in den Ausstellmechanismus des hinteren Deckels 12 ein, welcher bisher mit einem Riegelstein verriegelt war, und bewirkt eine Ausstellbewegung des hinteren Deckels 12, wobei seine Hinterkante angehoben wird (siehe Fig. 5). Wenn der Deckel 12 aus dieser Stellung wieder in seine Schließstellung abgesenkt wird, klinkt sich der Gleiter aus dem Ausstellmechanismus des Deckels 12 aus, wobei eine Verriegelung des Deckels 12 mittels des Riegelsteins bewirkt wird. Anschließend klinkt sich der Gleiter wieder in den Zugspriegel 26 ein, wodurch dieser entriegelt wird und in einer Schließbewegung mitgenommen wird (siehe Fig. 6).

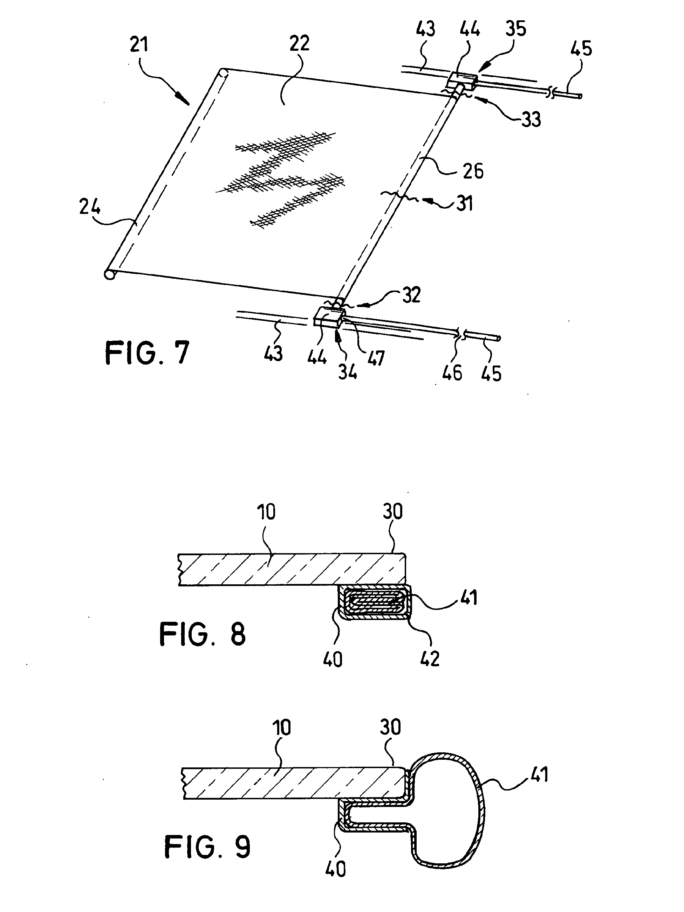

Der Zugspriegel 26 des hinteren Rollos 21, der z. B. als stabförmiges Element mit vollem oder hohlem Querschnitt gebildet ist, enthält zumindest eine Sollbruchstelle 31 (siehe Fig. 7, mit einer Wellenlinie angedeutet), die beispielsweise in der Mitte des Zugspriegels 26 angeordnet ist, und/oder zwei Sollbruchstellen 32 und 33, die beispielsweise an den beiden Rändern des Zugspriegels 26 benachbart zu den in Längsführungen 43 z. B. mit Gleitern 44 geführten Enden 34 und 35 des Zugspriegels 26 angeordnet sind. Die Sollbruchstellen sind derart ausgelegt, daß ein auf einer Rücksitzbank sitzender Insasse, der im Crashfall z. B. mit seinem Kopf auf den Zugspriegel 26 aufprallt, der in einer Auszugstellung des Rollos gemäß Fig. 1, in einer Aufwickelstellung gemäß Fig. 6 oder in einer Zwischenstellung positioniert sein kann, ein Verformen oder Zerbrechen des Zugspriegels 26 bewirken kann, so daß der Zugspriegel 26 nachgibt und keinen festen Widerstand bildet, wodurch ansonsten größere Verletzungen verursacht werden könnten. Die Sollbruchstellen können auch in einer Antriebseinrichtung für den Zugspriegel 26 vorgesehen sein wie z. B. in einem Antriebskabel 45 (Sollbruchstelle 46) oder an der Befestigung 47 des Antriebskabels 45 an dem Zugspriegel 26.

Alternativ kann der Zugspriegel 26 derart biegsam gebildet sein, daß er bei einem Aufprall ausweicht und damit ein Verletzungsrisiko verringert. Dazu kann der Zugspriegel 26 über seine ganze Länge oder nur in zumindest einem bestimmten Abschnitt wie z. B. in der Mitte biegsam gebildet sein.

Fig. 8 zeigt den Hinterabschnitt des vorderen Deckels 10, an dem ein längliches z. B. aus Kunststoff bestehendes Hohlprofil 40 angebracht ist, das einen Airbag 41 enthält. Das Hohlprofil 40 enthält eine Schwächung als Sollbruchstelle 42, so daß der sich aufblasende Airbag 41 das Hohlprofil 40 an definierter Stelle öffnet und sich im aufgeblasenen Zustand schützend vor den Hinterrand 30 des Dekkels 10 legt (Fig. 9). Zum Aufblasen des Airbags 41 ist beispielsweise in dem Hohlprofil 40 eine treibgaserzeugende Zündschnur enthalten. Im Crashfall ist somit ein Fahrzeuginsasse vor Verletzungen an der Hinterkante 30 des geöffneten und abgesenkten Deckels 10 weitgehend geschützt.

Das Hohlprofil 40 mit dem Airbag 41 kann ganz oder teilweise unterhalb des Hinterrandes 30 des Deckels 10, den Hinterrand 30 umgreifend oder als Teil einer rückseitigen Deckeldichtung gebildet sein.

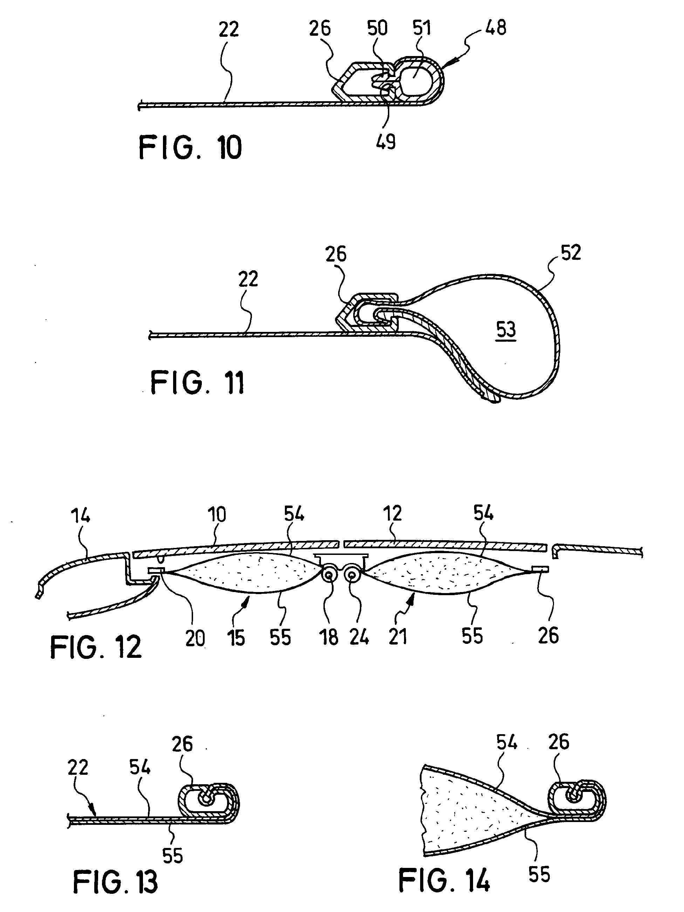

Fig. 10 zeigt einen Zugspriegel 26 des hinteren Sonnenrollos 21, der eine Aufpralldämpfeinrichtung in Form eines länglichen Elements 48 aufweist, das an einem Schlitz 49 des offenen Profils des Zugspriegels 26 eingeclipst ist und sich mit Widerhaken 50 daran hält. Das Element 48 enthält eine mit Luft oder mit einem Dämpfungsmaterial, z. B. Gummi oder Kunststoffschaum, gefüllte Kammer 51. Alternativ ist das Element 48 ein Airbag 52, dessen Hohlkammer 53 mittels eines Druckgases füllbar ist, so daß sich der Airbag 52 in seine Schutzstellung entfalten und aufblasen kann (Fig. 11).

Fig. 12 zeigt ein Fahrzeugdach mit einer Sonnenschutzeinrichtung in Form von zwei Sonnenrollos, deren Rollobahnen als Airbags gebildet sind, in gefüllter Schutzstellung. Jeder Sonnenrollo 15, 21 enthält eine obere Stoffbahn 54 und eine untere Stoffbahn 55, die aufeinander liegen und am Zugspriegel 20 bzw. 26 verankert sind (Fig. 13). Beim Auslösen des Airbags erfolgt die Zuführung des expandierenden Gases zwischen die beiden dichten Stoffbahnen 54 und 55 z. B. über den Zugspriegel 20 bzw. 26 (Fig. 14), an dem eine Gaseinheit angeordnet ist.

### Bezugszeichenliste

- 10: vorderer Deckel
- 12: hinterer Deckel
- 14: feste Dachhaut
- 15: vorderes Rollo
- 16: Rollobahn
- 18: Wickelwelle
- 20: Zugspriegel
- 21: hinteres Rollo
- 22: Rollobahn
- 24: Wickelwelle
- 26: Zugspriegel
- 28: Fahrzeuginnenraum
- 30: Hinterkante
- 31: Sollbruchstelle
- 32: Sollbruchstelle
- 33: Sollbruchstelle
- 34: Zugspriegelende
- 35: Zugspriegelende
- 40: Hohlprofil
- 41: Airbag
- 42: Sollbruchstelle
- 43: Längsführung
- 44: Gleiter
- 45: Antriebskabel
- 46: Sollbruchstelle
- 47: Befestigung
- 48: Element
- 49: Schlitz
- 50: Widerhaken
- 51: Kammer
- 52: Airbag
- 53: Hohlkammer
- 54: obere Stoffbahn
- 55: untere Stoffbahn

## Patentansprüche

1. Sonnenrollo, das unter einem Fahrzeugdach auf einer Wickelwelle aufgewickelt angeordnet und mittels eines an Führungen geführten Zugspriegels ausziehbar und in unterschiedlichen Auszugstellungen positionierbar ist,
**dadurch gekennzeichnet,**
**daß** für den Zugspriegel (26) eine Schutzeinrichtung vorgesehen ist, die im Crashfall einen Aufprall eines Insassen auf den Zugspriegel (26) mildert.

2. Sonnenrollo nach Anspruch 1,
**dadurch gekennzeichnet, daß** die Schutzeinrichtung eine Überlastsicherung enthält, die beim Aufprall ein Ausweichen oder Nachgeben des Zugspriegels (26) ermöglicht.

3. Sonnenrollo nach Anspruch 2,
**dadurch gekennzeichnet, daß** die Überlastsicherung zumindest eine Sollbruchstelle oder eine lösbare Clipsverbindung enthält.

4. Sonnenrollo nach Anspruch 3,
**dadurch gekennzeichnet, daß** die Sollbruchstelle (31, 32, 33, 46) an dem Zugspriegel (26), an der Führung (43) des Zugspriegels (26) oder an einer Antriebseinrichtung (45) für den Zugspriegel (26) gebildet ist.

5. Sonnenrollo nach Anspruch 2,
**dadurch gekennzeichnet, daß** als Überlastsicherung der Zugspriegel (26) beim Aufprall verformbar und insbesondere biegsam gebildet ist.

6. Sonnenrollo nach Anspruch 1,
**dadurch gekennzeichnet, daß** die Schutzeinrichtung eine Aufpralldämpfeinrichtung (48; 52) für den Zugspriegel (26) ist.

7. Sonnenrollo nach Anspruch 6,
**dadurch gekennzeichnet, daß** die Aufpralldämpfeinrichtung ein Luft- oder Gaspolster und insbesondere eine Airbageinrichtung (52) enthält.

8. Sonnenrollo nach Anspruch 7,
**dadurch gekennzeichnet, daß** die Rollobahn (16, 22) des Sonnenrollos (15, 21) die Airbageinrichtung enthält oder als Airbageinrichtung gebildet ist.

9. Sonnenrollo nach einem der Ansprüche 1 bis 8,
**dadurch gekennzeichnet, daß** es im Mittelbereich des Fahrzeugdaches angeordnet ist und nach hinten ausziehbar ist.

10. Sonnenrollo nach einem der Ansprüche 1 bis 9,
**dadurch gekennzeichnet, daß** es eine Antriebseinrichtung (45) zum Ausziehen und Aufwickeln der Rollobahn (16, 22) enthält.

11. Fahrzeugdach mit einer Dachöffnung, in der ein bewegbarer Deckel angeordnet ist und zum Freilegen der Dachöffnung unter einen hinteren Dachabschnitt absenkbar und dabei im Fahrzeuginnenraum nach hinten verschiebbar ist,
**dadurch gekennzeichnet,**
**daß** am Hinterrand (30) des Deckels (10) eine Schutzeinrichtung vorgesehen ist, die im Crashfall einen Aufprall eines Insassen auf den Hinterrand (30) des Deckels (10) mildert.

12. Fahrzeugdach nach Anspruch 11,
**dadurch gekennzeichnet, daß** der hintere Dachabschnitt ein festes, insbesondere transparentes Dachteil oder ein in der Dachöffnung angeordneter bewegbarer und insbesondere transparenter Deckel (12) ist, unter den der insbesondere transparente vordere Deckel (10) verschiebbar ist.

13. Fahrzeugdach nach Anspruch 11 oder 12,
**dadurch gekennzeichnet, daß** die Schutzeinrichtung eine Airbageinrichtung (41) enthält, die im Crashfall den Hinterrand (30) des Deckels (10) abdeckt.

14. Fahrzeugdach nach Anspruch 13,
**dadurch gekennzeichnet, daß** der aufblasbare Airbag (41) in einem Dekkelrahmen am Hinterrand (30) des Deckels (10) oder in einem am Dekkelhinterrandbereich angebrachten Profil (40) enthalten ist.

15. Fahrzeugdach nach einem der Ansprüche 11 bis 14,
**dadurch gekennzeichnet, daß** es ein Sonnenrollo (21) nach einem derAnsprüche 1 bis 10 enthält.

16. Airbageinrichtung in einem Fahrzeug,
**dadurch gekennzeichnet,**
**daß** ein Airbag (41) an einem Hinterrand (30) eines bewegbaren Deckels (10) vorgesehen ist, der in einer Dachöffnung des Fahrzeugdachs angeordnet ist und zum Freilegen der Dachöffnung unter einen hinteren Dachabschnitt absenkbar und dabei im Fahrzeuginnenraum nach hinten verschiebbar ist, so daß im Crashfall ein Aufprall eines Insassen auf den Hinterrand (30) des Deckels (10) gemildert ist.

17. Airbageinrichtung in einem Fahrzeug,
**dadurch gekennzeichnet,**
**daß** ein Airbag (52) an einem Zugspriegel (26) eines Sonnenrollos (21) vorgesehen ist, das unter einem Fahrzeugdach auf einer Wickelwelle (24) aufgewickelt angeordnet und mittels des an Führungen (43) geführten Zugspriegels (26) ausziehbar und in unterschiedlichen Auszugstellungen positionierbar ist, so daß im Crashfall ein Aufprall eines Insassen auf den Zugspriegel (26) gemildert ist.
